# FASCICULE DE BREVET EUROPEEN

(11) **EP 2 460 722 B1**
(45) Date de publication et mention de la délivrance du brevet: **16.10.2013**
(21) Numéro de dépôt: 11191238.2
(22) Date de dépôt: 30.11.2011
(51) Int. Cl.: B64C 25/20, F16C 25/08, F16C 31/04, F16C 33/58, F16H 25/20, F16H 25/24, F16C 19/50, B64C 25/24

(54) **Actionneur télescopique électromécanique**
Teleskopisher elektromechanischer Aktuator
Telescopic electromechanical actuator

(30) Priorité: 06.12.2010 FR 1060094
(43) Date de publication de la demande: 06.06.2012
(73) Titulaire: Messier-Bugatti-Dowty, 78140 Velizy Villacoublay (FR)
(72) Inventeur: Balducci, Gérard, 78640 Saint-Germain-de-la-Grange (FR); Quenerch'du, Marc, 75020 Paris (FR)
(74) Mandataire: Parzy, Benjamin Alain

(56) Documents cités:
- DE-A1-102004 062 320
- DE-A1-102007 054 180
- DE-A1-102008 061 120
- JP-A- 2006 189 129
- US-A- 2 701 478
- US-A1- 2010 162 838

## Description

L'invention est relative à un actionneur télescopique électromécanique, notamment destiné à assurer la manoeuvre d'un atterrisseur d'aéronef.

### ARRIERE-PLAN TECHNOLOGIQUE DE L'INVENTION

Dans certaines circonstances, comme dans DE 10 2008 061120 A1, qui divulgue toutes les caractéristiques du préambule de la revendication 1, les actionneurs télescopiques utilisés pour mouvoir un élément relativement à un autre élément peuvent être utilisé en parallèle d'un organe qui impose une distance entre les deux éléments attelés à l'actionneur. C'est par exemple le cas d'un atterrisseur d'aéronef ayant une jambe articulée sur la structure de l'aéronef et arrivant en position déployée. Il est connu d'atteler une contrefiche entre la jambe et la structure de l'aéronef, la contrefiche étant verrouillée en position lorsque la jambe arrive en position déployée, afin de stabiliser la jambe dans cette position. L'actionneur de manoeuvre de l'atterrisseur, qui est également attelé à la jambe de l'atterrisseur et à la structure de l'aéronef, se trouve alors en parallèle de la contrefiche qui est rigide. La longueur de l'actionneur, c'est-à-dire la distance entre ses deux attaches, est alors imposée par la contrefiche. Par ailleurs, la jambe et la contrefiche sont susceptibles de se déformer en service, imposant alors des variations de longueur de l'actionneur.

Les actionneurs hydrauliques de relevage utilisés jusqu'alors sont parfaitement adaptés à la fonction de relevage, car ils sont réversibles de sorte qu'ils peuvent suivre sans problème les mouvements imposés par la déformation de l'atterrisseur. Pour peu que les deux chambres de l'actionneur soient reliées au retour, l'effort résistant imposé par l'actionneur à ces variations de longueurs est minime.

Les actionneurs électromécaniques posent plus de problèmes. En effet, ils ne sont généralement pas réversibles, ce qui les empêche de s'allonger ou se contracter sous l'effet d'une sollicitation externe. En outre, ils sont susceptibles d'imposer un effort résistant très important. Cet effort résistant sollicite tant la structure interne de l'actionneur que les points de l'atterrisseur ou de la structure de l'aéronef auxquels il est attaché.

On connaît en outre des actionneurs électromécaniques télescopiques comportant un cylindre dans lequel une tige est montée pour coulisser. L'actionneur comporte une vis mère qui est actionnée par un moteur électrique et qui s'étend dans la tige. La tige de l'actionneur est solidaire d'un écrou qui coopère avec la vis de sorte que lorsque la vis est mise en rotation par le moteur, la tige coulisse télescopiquement dans le cylindre. L'actionneur comporte des moyens de retenue qui retiennent axialement un palier de la vis. Sur certains actionneurs, les moyens de retenue peuvent libérer axialement celui-ci de façon à autoriser un déplacement de la tige sous l'action d'une charge attelée à la tige, en cas par exemple de blocage du moteur. Ce type d'actionneur est particulièrement adapté à la fonction de manoeuvre d'un atterrisseur, puisqu'en cas de blocage de moteur, il est possible de libérer la tige et ainsi de laisser la jambe de l'atterrisseur descendre sous l'effet de la gravité jusqu'à la position déployée. Cependant, en fonctionnement normal, ce type d'actionneur n'est pas réversible et pâtit des inconvénients précités.

### OBJET DE L'INVENTION

L'invention a pour objet un actionneur du type précité, mais ne souffrant pas des inconvénients liés notamment à leur irréversibilité.

### BREVE DESCRIPTION DE L'INVENTION

En vue de la réalisation de ce but, on propose un actionneur télescopique comportant :
- un cylindre comportant des moyens de son attelage à un premier élément externe ;
- une tige montée à coulissement télescopique dans le cylindre selon un axe de coulissement et comportant des moyens de son attelage à un deuxième élément externe ;
- une vis mère montée tournante sur le cylindre autour de l'axe de coulissement et s'étendant à l'intérieur de la tige pour coopérer avec un écrou solidaire de la tige, de sorte qu'une rotation de la vis mère provoque un coulissement de la tige ;
- des moyens d'entraînement en rotation de la vis mère ;
- des moyens de retenue axiale de la vis mère qui retiennent axialement prisonnier un palier de la vis mère ;

Selon l'invention, les moyens de retenue sont agencés pour retenir le palier de la vis mère avec un jeu axial apte à absorber des déplacements imposés de la tige par rapport au cylindre.

Ainsi, lorsque l'actionneur est utilisé pour provoquer la descente de la jambe de l'atterrisseur, le palier de la vis mère est en butée contre l'élément des moyens de retenue axiale qui le retient alors que les moyens d'entraînement font tourner la vis mère. Lorsque l'atterrisseur est arrivé en position déployée, la contrefiche de l'atterrisseur se fige et se comporte comme un élément rigide, immobilisant la jambe de l'atterrisseur. Dès lors, la distance entre les points d'attache de l'actionneur est fixée et la tige est immobilisée axialement par rapport au cylindre.

En continuant légèrement la rotation de la vis mère, on provoque alors un léger déplacement axial de la vis mère de sorte que son palier vient se placer sensiblement au milieu de l'espace qui lui est alloué par les moyens de retenue axiale, le jeu axial se répartissant alors de part et d'autre du palier. En arrêtant les moyens d'entraînement alors que le palier de la vis mère est dans cette position, on s'assure qu'en cas de déformation de l'atterrisseur ou de la structure de l'aéronef induisant une variation de la longueur de l'actionneur, cette variation de longueur puisse être absorbée dans la limite du jeu axial ainsi réparti dans un sens ou dans l'autre. Ainsi, la longueur de l'actionneur peut varier sans que l'actionneur n'oppose d'autre force qu'une force de frottement de déplacement axial en réponse au coulissement imposé.

L'invention s'applique aussi bien à un actionneur dont les moyens de retenue retiennent en permanence le palier de la vis mère qu'à un actionneur dont les moyens de retenue axiale sont commandables pour libérer sélectivement le palier de la vis mère, ce qui est utile pour autoriser le libre coulissement de la tige dans le cylindre, par exemple dans des cas de défaillance de l'organe moteur provoquant la rotation de la vis mère.

### BREVE DESCRIPTION DES FIGURES

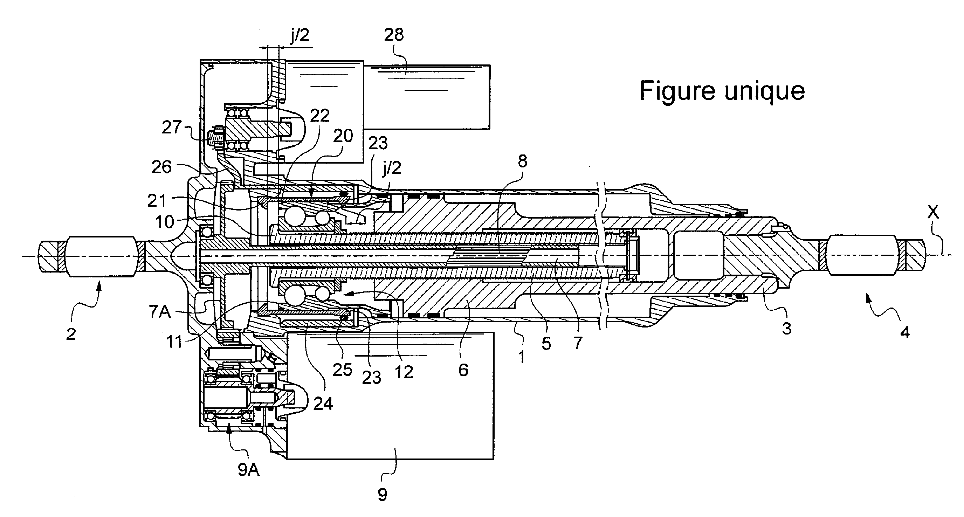

L'invention sera mieux comprise à la lumière de la description qui suit en référence à l'unique figure annexée illustrant une coupe longitudinale d'un actionneur selon un mode particulier de réalisation de l'invention.

### DESCRIPTION DETAILLEE DES FIGURES

L'actionneur de l'invention comporte
- un cylindre 1 portant à l'une de ses extrémités une chape 2 munie d'une rotule pour son attelage à un élément externe, par exemple la structure de l'aéronef, l'autre des extrémités du cylindre étant ouverte ;
- une tige 3 montée à coulissement télescopique dans le cylindre selon l'axe de coulissement X, et portant à son extrémité une chape 4 portant une rotule pour son attelage à un deuxième élément externe, par exemple une jambe d'atterrisseur ;
- une vis mère 5 s'étendant à l'intérieur de la tige 3 et qui coopère avec celle-ci par une liaison hélicoïdale au moyen d'un écrou 6 solidaire de la tige 3 qui forme un palier de la tige et qui et engagé sur un filetage externe de la vis mère 5, de sorte qu'une rotation de la vis mère 5 provoque un coulissement de la tige 3 ;
- un arbre cannelé 7 qui s'étend à l'intérieur de la vis mère 5 et qui coopère avec celle-ci par une liaison prismatique au moyen de cannelures 8 (montrées ici partiellement, mais s'étendant sur toute la longueur de l'arbre cannelé 7) coopérant avec des cannelures homologues de la vis mère 5 ;
- un moteur 9 adapté à entraîner une roue dentée 7A solidaire de l'arbre cannelé 7 pour entraîner celui-ci en rotation par l'intermédiaire d'un étage de réduction 9A, ladite rotation de l'arbre cannelé 7 provoquant la rotation de la vis mère 5.

La vis mère 5 a une extrémité 10 portant un palier 11 qui forme la cage externe d'un roulement à billes 12 et qui est retenu axialement dans le cylindre 1 par des moyens de retenue 20. Les moyens de retenue 20 sont ici du type à griffes. On rappelle pour mémoire que ce type de moyens de retenue comporte une virole 21 dans laquelle sont définies des griffes 22 ayant des extrémités 23 en crochet et pouvant fléchir radialement pour laisser passer l'objet à retenir, en l'occurrence ici le palier 11 de la vis mère 5.

Dans la situation illustrée, le palier 11 se trouve emprisonné par les griffes 22, celles-ci étant empêchées de fléchir au moyen d'un manchon rotatif 24 qui porte sur sa face interne une succession de billes 25 disposées circonférentiellement en regard des extrémités des griffes et séparées entre elles par des espaces. Lorsque le manchon 24 est placé dans une première position angulaire de blocage (comme illustré ici) dans laquelle les billes 25 sont directement en regard des extrémités 23 des griffes 22, les griffes 22 sont empêchées de fléchir, et le palier 11 est maintenu prisonnier par les griffes 22. Lorsque le manchon 24 est placé dans une seconde position angulaire de libération dans laquelle les espaces entre les billes 25 sont ramenés en regard des extrémités 23 des griffes 22, celles-ci peuvent fléchir radialement, et le palier peut, sous l'effet d'une traction sur la tige 3, s'échapper des griffes 22 pour autoriser ainsi un coulissement de la vis-mère entraîné par la tige 3. Pour faire passer le manchon 24 de la position de blocage à la position de libération, le manchon est ici rendu solidaire d'un levier 26 qui est manoeuvré par un excentrique 27 lui-même actionné par un moteur 28. La rotation du moteur 28 provoque la rotation de l'excentrique 27, et donc le basculement du levier 26 qui entraîne le manchon 24 en rotation.

Ici, et selon un aspect essentiel de l'invention, le palier 11 est retenu par les griffes 22 des moyens de retenue 20 avec un jeu axial j. Ici, on a représenté le palier dans la position moyenne, le jeu j se répartissant de part est d'autre du palier 11 en demi-jeux j/2. L'opération de l'actionneur utilisé comme vérin de manoeuvre d'un atterrisseur se fait comme suit.

En opération normale, le palier 11 de la vis mère 5 est retenu axialement par les moyens de retenue 20, comme illustré ici. Lors d'un déplacement de la jambe de l'atterrisseur entre la position stockée et la position déployée, la jambe va exercer une traction sur la tige 3 et forcer le palier 11 à venir en butée contre les extrémités 23 des griffes 22. Pour autoriser la descente de l'atterrisseur, il convient de commander le moteur 9 pour faire tourner l'arbre cannelé, ce qui provoque la rotation de la vis mère 5 et, partant, le coulissement de la tige 3 dans le cylindre 1.

La descente de l'atterrisseur continue jusqu'à ce que celui-ci arrive en position déployée. La contrefiche stabilisant la jambe est alors rigidifiée, et la jambe est immobilisée dans sa position déployée. Dès lors, la distance entre les chapes 2,4 du cylindre 1 et de la tige 3 est figée.

Si la rotation du moteur 9 n'est pas stoppée, et comme la tige 3 ne peut plus se déplacer par rapport au cylindre 1, c'est la vis mère 5 qui va reculer. Ainsi, le palier 11 va se déplacer sous les griffes 22 pour progressivement se recentrer dans l'espace dans lequel il est prisonnier. Quant le palier 11 arrive sensiblement au centre de l'espace sous les griffes 22 (comme illustré ici, avec le jeu sensiblement réparti de part et d'autre du palier), il convient de stopper le moteur 9.

Ainsi disposé, l'actionneur pourra subir des variations de longueur (par exemple lors de manoeuvres de l'aéronef au sol provoquant une déformation de la jambe ou de la structure de l'aéronef), ces variations de longueur étant absorbées dans la limite du jeu installé sans que l'actionneur n'oppose d'autre résistance qu'un simple effort de frottement.

Lors de la remontée de la jambe de l'atterrisseur de sa position déployée à sa position stockée, il convient de faire tourner le moteur 9 dans l'autre sens. Ainsi, après une première phase de rattrapage de jeu lors de laquelle le palier 11 va revenir en butée contre les extrémités 23 des griffes 22, la tige 3 va se mettre à se déplacer axialement pour rentrer dans le cylindre 1. A l'arrivée de l'atterrisseur dans la position repliée, la distance entre les chapes 2,4 est de nouveau figée. Il convient alors d'arrêter immédiatement le moteur 9 pour éviter l'imposition d'un effort sur l'atterrisseur et la structure de l'aéronef, puis de faire tourner le moteur 9 dans l'autre sens jusqu'à ce que le palier 11 se place au centre de l'espace sous les griffes 22.

Ainsi disposé, l'actionneur pourra subir des variations de longueur (par exemple lors de manoeuvres de l'aéronef en vol provoquant une déformation de la jambe ou de la structure de l'aéronef), ces variations de longueur étant absorbées dans la limite du jeu installé sans que l'actionneur n'oppose d'autre résistance qu'un simple effort de frottement

En cas d'urgence, par exemple en cas de défaillance du moteur 9 alors que l'atterrisseur est en position repliée, il est bien sûr toujours possible en tournant le manchon 24 de libérer le palier 11 et ainsi d'autoriser la vis mère 5 à se déplacer avec la tige 3 sous l'action du poids de la jambe de l'atterrisseur. Une telle disposition permet de garantir le déploiement de l'atterrisseur même si le moteur 9 est défaillant ou n'est plus alimenté.

L'invention n'est pas limitée à ce qui vient d'être décrit, mais englobe au contraire toute variante entrant dans le cadre défini par les revendications. En particulier, bien qu'ici l'organe de retenue commandable pour libérer sélectivement le palier de la vis mère soit du type à griffes, on pourra utiliser d'autres organes de retenue, comme par exemple un organe de retenue à doigt ou à segment escamotable, pourvu qu'un jeu soit organisé dans la retenue du palier de la vis mère.

Plus généralement, l'invention s'applique également à des actionneurs dont les moyens de retenue du palier de la vis mère ne sont pas commandables pour libérer ledit palier. Dans ce cas, le palier reste en permanence prisonnier - avec le jeu j - des moyens de retenue, et les moyens d'entraînement en rotation de la vis mère peuvent être simplifiés et ne pas comporter d'arbre cannelé intermédiaire entre l'organe moteur et la vis mère.

## Revendications

1. Actionneur télescopique comportant :
- un cylindre (1) comportant des moyens d'attelage (2) à un premier élément externe ;
- une tige (3) montée à coulissement télescopique dans le cylindre selon un axe de coulissement (X) et comportant des moyens d'attelage (4) à un deuxième élément externe;
- une vis mère (5) montée tournante dans le cylindre autour de l'axe de coulissement et s'étendant à l'intérieur de la tige pour coopérer avec un écrou (6) solidaire de la tige, de sorte qu'une rotation de la vis mère provoque un coulissement de la tige ;
- des moyens d'entraînement en rotation (7, 9) de la vis mère (5) ;
- des moyens de retenue axiale (20) de la vis mère qui retiennent axialement prisonnier un palier (11) de la vis mère, les moyens de retenue étant agencés pour retenir le palier (11) de la vis mère avec un jeu axial (j) apte à absorber des déplacements imposés de la tige par rapport au cylindre ;
**caractérisé en ce que** les moyens d'entraînement en rotation (7, 9) de la vis mère sont commandables pour déplacer axialement le palier (11) de la vis mère (5) jusqu'à ce que celui-ci soit centré dans les moyens de retenue de sorte à bénéficier sensiblement d'un demi-jeu (j/2) de part et d'autre du palier (11).

2. Actionneur télescopique selon la revendication 1, dans lequel les moyens de retenue (20) sont commandables pour libérer sélectivement le palier (11) de la vis mère (5) en réponse à un ordre de libération.

3. Actionneur télescopique selon la revendication 1, dans lequel les moyens d'entraînement en rotation de la vis mère comportent :
- un arbre cannelé (7) monté tournant sur le cylindre autour de l'axe de coulissement et s'étendant à l'intérieur de la vis pour entraîner celle-ci en rotation par une liaison à cannelures;
- un organe moteur (9) d'entraînement en rotation de l'arbre cannelé.

4. Procédé d'actionnement d'un actionneur selon la revendication 1, dans lequel lorsque la longueur de l'actionneur est figée par immobilisation de la tige vis à vis du cylindre, on actionne les moyens d'entraînement de la vis mère (9) pour déplacer axialement le palier (11) de la vis mère (5) jusqu'à ce que celui-ci soit centré dans les moyens de retenue de sorte à bénéficier sensiblement d'un demi-jeu (j/2) de part et d'autre du palier (11).

## Patentansprüche

1. Teleskopischer Aktuator umfassend:
einen Zylinder (1) mit Mitteln (2) zur Verbindung mit einem ersten externen Element;
eine Stange (3), die entlang einer Verschiebeachse (X) gleitend verschiebbar in dem Zylinder angeordnet ist und Mittel zur Verbindung mit einem zweiten externen Element umfasst;
eine Gewindespindel (5), die in dem Zylinder um die Verschiebeachse drehbar gelagert ist und sich innerhalb der Stange erstreckt, um mit einer fest mit der Stange verbundenen Mutter (6) zusammenzuwirken derart, dass eine Drehung der Gewindespindel eine Verschiebung der Stange bewirkt;
Antriebsmittel (7, 9) zum Drehen der Spindel (5);
Rückhaltemittel (20) zum axialen Festhalten der Spindel, die ein Lager (11) der Spindel axial einsperren, wobei die Rückhaltemittel so ausgebildet sind, dass sie das Lager (11) der Spindel mit einem axialen Spiel (j) zurückhalten, das geeignet ist, auf die Stange ausgeübte Verschiebungen relativ zum Zylinder zu absorbieren;
dadurch gekenntzeichnet, dass die Antriebsmittel (7, 9) zum Drehen der Spindel steuerbar sind, um das Lager (11) der Spindel (5) axial soweit zu verstellen, dass dieses in den Rückhaltemitteln zentriert wird, so dass es ein im Wesentlichen halbes Spiel (j/2) beiderseits des Lagers (11) nutzen kann.

2. Teleskopischer Aktuator nach Anspruch 1, wobei die Rückhaltemittel (20) steuerbar sind, um das Lager (11) der Gewindespindel (5) auf einen Freigabebefehl hin wahlweise freizugeben.

3. Teleskopischer Aktuator nach Anspruch 1, wobei die Antriebsmittel zum Drehen der Gewindespindel umfassen:
eine Keilwelle (7), die um die Verschiebeachse drehbar in dem Zylinder gelagert ist und sich innerhalb der Gewindespindel erstreckt, um diese über die Keilverbindung zu drehen;
einen Antriebsmotor (9) zum Drehen der Keilwelle.

4. Verfahren zum Betätigen eines Aktuators nach Anspruch 1, bei dem, wenn die Länge des Aktuators durch Blockieren der Stange gegenüber dem Zylinder festgehalten wird, man die Antriebsmittel (9) für die Gewindespindel betätigt, um das Lager (11) der Gewindespindel (5) axial soweit zu verstellen, bis das Lager innerhalb der Rückhaltemittel zentriert ist, so dass man im Wesentlichen ein halbes Spiel (j/2) beiderseits des Lagers (11) nutzen kann.

## Claims

1. A telescopic actuator comprising:
· a cylinder (1) having means (2) for coupling it to a first external element;
· a rod (3) mounted to slide telescopically in the cylinder along a sliding axis (X) and including means (4) for coupling it to a second external element;
· a lead screw (5) mounted to rotate in the cylinder about the sliding axis and extending inside the rod to co-operate with a nut (6) secured to the rod, such that rotating the lead screw causes the rod to slide;
· drive means (7, 9) for driving the lead screw (5) in rotation; and
· retention means (20) for axially retaining the lead screw, which means hold a bearing (11) of the lead screw captive in an axial direction, the retention means being arranged to retain the bearing (11) of the lead screw with axial clearance (i) suitable for absorbing movements imparted to the rod relative to the cylinder;
the actuator being **characterized in that** the drive means (7, 9) for driving the lead screw in rotation are controllable to move the bearing (11) of the lead screw (5) axially until it is centered in the retention means so as to benefit from substantially half of the clearance (j/2) on either side of the bearing (11).

2. A telescopic actuator according to claim 1, wherein the retention means (20) are controllable in selective manner to release the bearing (11) of the lead screw (5) in response to a release order.

3. A telescopic actuator according to claim 1, wherein the drive means for driving the lead screw in rotation comprise:
· a fluted shaft (7) mounted to rotate in the cylinder about the sliding axis and extending inside the screw to drive it in rotation via a fluting connection; and
· a motor member (9) for driving the fluted shaft in rotation.

4. A method of actuating an actuator according to claim 1, wherein, when the length of the actuator is "frozen" by the rod being held stationary relative to the cylinder, the drive means for driving the lead screw (5) are actuated to move the bearing (11) of the lead screw (5) until it is centered in the retention means so as to benefit from substantially half of the clearance (j/2) on either side of the bearing (11).
